(19) Europäisches Patentamt
European Patent Office
Office européen des brevets

(11) **EP 3 622 445 B1**

## (12) FASCICULE DE BREVET EUROPEEN

(45) Date de publication et mention
de la délivrance du brevet:
**09.06.2021 Bulletin 2021/23**

(21) Numéro de dépôt: **18720768.3**

(22) Date de dépôt: **17.04.2018**

(51) Int Cl.:
***G06N 5/02*** *(2006.01)*

(86) Numéro de dépôt international:
**PCT/FR2018/050965**

(87) Numéro de publication internationale:
**WO 2018/206871 (15.11.2018 Gazette 2018/46)**

(54) **PROCEDE, MISE EN OEUVRE PAR ORDINATEUR, DE RECHERCHE DE REGLES D'ASSOCIATION DANS UNE BASE DE DONNEES**

VERFAHREN, DURCH COMPUTER IMPLEMENTIERT, ZUM SUCHEN VON REGELN DER ASSOZIATION IN EINER DATENBANK

METHOD, IMPLEMENTED BY COMPUTER, FOR SEARCHING FOR RULES OF ASSOCIATION IN A DATABASE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.05.2017 FR 1754037**

(43) Date de publication de la demande:
**18.03.2020 Bulletin 2020/12**

(73) Titulaire: **Quantics Technologies**
**75008 Paris (FR)**

(72) Inventeur: **MARTINETTI, Stéphane**
**33000 Bordeaux (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
- **Robert J Lempert ET AL: "Comparing Algorithms for Scenario Discovery", RAND Infrastructure, Safety, and Environment, 1 mars 2008 (2008-03-01), pages 1-35, XP055460843, Extrait de l'Internet: URL:https://pdfs.semanticscholar.org/be50/ 8443c1a19c46d37355891b08714abbd9b588.pdf [extrait le 2018-03-20]**
- **POLONIK W ET AL: "PRIM analysis", JOURNAL OF MULTIVARIATE ANALYSIS, ACADEMIC PRESS, ORLANDO, FL, USA, vol. 101, no. 3, 1 mars 2010 (2010-03-01), pages 525-540, XP026820607, ISSN: 0047-259X, DOI: 10.1016/J.JMVA.2009.08.010 [extrait le 2009-09-01]**
- **Jennifer Sniadecki ET AL: "Bump Hunting With SAS: A Macro Approach To Employing PRIM", SAS Global Forum - Data Mining and Text Analytics, 1 janvier 2011 (2011-01-01), XP055460163, Paris ISBN: 978-92-6-405624-4 Extrait de l'Internet: URL:http://support.sas.com/resources/paper s/proceedings11/156-2011.pdf [extrait le 2018-03-16]**

**Description**

**DOMAINE TECHNIQUE DE L'INVENTION**

La présente invention se rapporte au domaine général du traitement de structures de données dans des bases de données, et en particulier aux procédés, mis en œuvre par ordinateur, de recherche de règles d'associations dans des bases de données volumineuses.

La présente invention concerne plus particulièrement un procédé, mis en œuvre par une unité de traitement d'un ordinateur et/ou par un circuit logique programmable ou reprogrammable, de recherche de règles d'association dans une base de données. La présente invention concerne également un produit programme d'ordinateur comportant des instructions pour l'exécution d'un tel procédé de recherche, ainsi qu'un support d'enregistrement sur lequel est enregistré un programme d'ordinateur comprenant des instructions de code de programme pour mettre en œuvre tout ou partie des étapes de ce procédé.

De nombreuses applications industrielles de la présente invention ont été identifiées, incluant, sans que cette liste ne soit exhaustive, des dispositifs d'analyse de pannes dans des systèmes industriels, des dispositifs de détection de vigilance du conducteur dans un véhicule, ou encore des dispositifs de recherche de relations de cause à effet dans des données médicales ou pharmaceutiques.

**ETAT DE LA TECHNIQUE ANTERIEURE**

Généralement, les techniques d'exploration de données dans une base de données peuvent être séparées en deux grandes catégories qui caractérisent deux niveaux d'exploration :

- l'exploitation de données transactionnelles et les requêtes ;
- l'exploration de données pour l'informatique décisionnelle.

La technique d'exploitation de données transactionnelles et de requêtes porte sur des données dont l'objet initial est l'archivage, et permet d'extraire de l'information que l'on sait détenir. La technique d'exploration de données pour l'informatique décisionnelle, quant à elle, permet d'une part de produire de l'information nouvelle à partir des données, et d'autre part de bénéficier d'améliorations stratégiques visant à un avantage concurrentiel ou à une meilleure gestion des risques et des coûts, à travers la production de réponses à des questions non triviales et non accessibles via les requêtes traditionnelles.

Dans le cas des techniques d'exploration de données pour l'informatique décisionnelle, le but est de modéliser un comportement sur les données pour en extraire de l'information qu'on n'est pas sûr a priori de pouvoir comprendre, et dont la structure va dépendre du type de problème auquel on est confronté. La matière première est l'exploration de données traitées et propres, organisées en base sous forme de tableaux dont les colonnes représentent des variables et les lignes des instances (par exemple des individus, ou encore des instants pour des séries temporelles). En fonction de l'objectif poursuivi (description ou prédiction), du type de données (numériques ou textuelles, quantitatives ou qualitatives, discrètes ou continues) et du problème posé, il s'agit de modéliser et estimer les relations entre les données (régressions linéaire, logistique ou autre), de classer les individus (via des arbres de décisions, des réseaux de neurones ou autre), de créer des scores de risque et d'appétence pour des clients et prospects, de produire des prévisions de variables économiques et financières, et bien d'autres applications touchant une grande variété de domaines. Deux grandes familles d'approches se présentent alors pour faire de l'exploration de données :

- la modélisation : dans certaines activités et pour certaines situations données, des modèles sont capables de décrire le fonctionnement d'un système complexe. Ces modèles introduisent des variables et des paramètres associés, ainsi que leurs relations. Les données sont alors utilisées pour estimer les paramètres et valider la pertinence des variables, puis pour confirmer ou infirmer la théorie.
- Les techniques de classification ou de recherche de règles d'association :beaucoup des nouvelles activités industrielles ou de services de ces dernières années ont fait naître de nouvelles données qui échappent à la modélisation. Un problème qui se pose alors est celui de l'utilisation de la masse considérable des données recueillies pour améliorer l'efficacité des entreprises auprès de leurs clients lorsqu'elles touchent à des activités pour lesquelles les relations entre les variables ne sont pas bien connues.

Dans ces dernières situations, qui échappent à la modélisation (par exemple du fait d'un manque de théorie préétablie, de difficultés à déterminer des variables pertinentes au regard de la profusion des données, ou encore de l'explosion combinatoire liée à la nécessité d'utiliser un maximum de variables pour comprendre des systèmes complexes), il est commun d'utiliser la puissance de calcul des ordinateurs pour produire des solutions, soit exactes, soit approchées, soit locales.

La plupart du temps, il n'existe pas d'algorithme permettant de résoudre le problème en un temps raisonnable. On parle de problème NP-difficile en mathématiques. Un cas classique est celui du voyageur de commerce : celui-ci doit minimiser la distance nécessaire à parcourir pour relier au cours de son voyage d'affaires un certain nombre de villes dont on connait les distances deux à deux. Une première méthode visant à résoudre ce problème, simple conceptuellement, consiste à énumérer tous les itinéraires possibles traversant toutes les villes une et une seule fois, à en calculer la longueur totale, et à choisir l'itinéraire le plus court. A ce jour, aucune solution mathématique ne permet de trouver l'optimum global de ce problème en temps polynomial, c'est-à-dire en un temps qui ne croisse pas exceptionnellement vite à mesure qu'on ajoute des instances (ici, des villes). La combinatoire nous indique que la solution naïve de l'énumération devient très vite impraticable même pour des ordinateurs puissants en un temps raisonnable, au-delà de quelques dizaines de villes. Ainsi, on peut essayer de trouver des optimums locaux.

Dans les situations qui échappent à la modélisation, et qui sont représentées par une base de données, il est connu d'autres techniques visant à identifier, dans cette base, des données pertinentes constituant autant de solutions à un problème NP-difficile donné.

Il est ainsi connu des procédés, mis en œuvre par ordinateur, de recherche de règles d'associations dans une base de données. Parmi ces derniers, il est connu en particulier un procédé, mis en œuvre par ordinateur, et connu sous l'acronyme PRIM (de l'anglais « Patient Rule Induction Method »). Dans ce procédé de recherche de règles d'associations, une base de données est stockée dans des moyens de mémorisation de l'ordinateur et comporte un ensemble de données. L'ensemble de données est organisé sous la forme d'une liste d'instances, chaque instance étant définie par un ensemble de valeurs numériques réelles prises par un nombre prédéterminé de variables. Le procédé comprend une étape de sélection d'un ensemble de $N1$ variables parmi les variables de la liste d'instances ; cet ensemble formant un ensemble de variables d'entrée et définissant un espace de dimension $N1$ ; et une étape de sélection d'une variable parmi les variables restantes de la liste d'instances, cette variable formant une variable de sortie. Chaque instance est représentée par un point dans l'espace de dimension $N1$. Le procédé comprend en outre une étape de définition d'au moins une modalité pour la variable de sortie sélectionnée, autrement dit d'un critère à vérifier par la valeur de cette variable de sortie ; et une étape de définition d'une taille minimale de régions à explorer dans l'espace de dimension $N1$. Le procédé comprend en outre une étape de génération, dans l'espace de dimension $N1$, de régions contenant plusieurs points vérifiant la modalité précédemment définie. Le procédé PRIM génère séquentiellement les régions en supprimant à chaque étape les observations déjà couvertes. Le procédé comprend enfin une étape de détermination de régions d'intérêt parmi ces régions générées. Chaque région d'intérêt ainsi déterminée vérifie le critère de taille minimale précédemment défini, et contient un nombre de points vérifiant la modalité précédemment définie tel que la densité de ces points dans la région est supérieure à une densité-seuil prédéterminée. Les valeurs limites des variables d'entrée qui délimitent chaque région d'intérêt ainsi déterminée définissent une règle d'association dans la base de données.

Toutefois, un inconvénient de ce procédé PRIM est qu'il implique des calculs complexes et chronophages de la part de l'unité de traitement de l'ordinateur. En outre, la base de données n'est pas explorée de manière exhaustive, ce qui nuit à la précision des résultats obtenus. Enfin, la mise en œuvre de ce procédé PRIM nécessite de prévoir une gestion de variables redondantes, mais sans pouvoir effectuer celle-ci en amont. Cette gestion des variables redondantes, et notamment la suppression de ces dernières, est ainsi effectuée ex *post,* ce qui est préjudiciable là encore à la précision des résultats obtenus.

## RESUME DE L'INVENTION

Un but de la présente invention est de pallier au moins partiellement les inconvénients précités.

En particulier, un but de la présente invention est de proposer un procédé, mis en œuvre par ordinateur, de recherche de règles d'association dans une base de données permettant de réduire la complexité et la durée des calculs dans l'ordinateur, tout en améliorant la précision des résultats obtenus.

A cette fin, la présente invention propose un procédé, mis en œuvre par une unité de traitement d'un ordinateur et/ou par un circuit logique programmable ou reprogrammable, de recherche de règles d'association dans une base de données, la base de données étant stockée dans des moyens de mémorisation de l'unité de traitement ou dans le circuit logique programmable ou reprogrammable et comportant un ensemble de données, l'ensemble de données étant organisé sous la forme d'une liste d'instances, chaque instance étant définie par un ensemble de valeurs numériques réelles prises par un nombre prédéterminé de variables ; le procédé comprenant les étapes suivantes:

- la sélection d'un ensemble de $N1$ variables parmi lesdites variables de la liste d'instances, ledit ensemble de $N1$ variables formant un ensemble de variables d'entrée et définissant un espace de dimension $N1$ ; et la sélection d'une variable parmi les variables restantes de la liste d'instances, ladite variable formant une variable de sortie ;

- l'ordonnancement, pour chaque variable d'entrée de la liste d'instances sélectionnée, des valeurs numériques des instances pour cette variable, de sorte à passer d'une topologie de valeurs réelles à une topologie de valeurs ordinales pour les variables d'entrée sélectionnées, chaque instance étant alors définie par un ensemble de rangs associés à chacune des valeurs des variables d'entrée de cette instance, chaque instance étant représentée par un point dans ledit espace de dimension $N1$ ;

- la définition d'au moins une modalité pour la variable de sortie sélectionnée, ladite modalité étant définie comme un critère à vérifier par la valeur de ladite variable de sortie ;

- l'exploration, dans des sous-espaces de l'espace de dimension $N1$, de régions convexes droites, chaque région convexe droite explorée étant un hyperrectangle présentant, sur deux sommets diagonalement opposés selon une grande diagonale dudit hyperrectangle, deux points représentatifs de deux instances dont la valeur de la variable de sortie vérifie ladite modalité, chaque région convexe droite explorée étant en outre l'hyperrectangle qui, dans le sous-espace dont la dimension correspond à la dimension dudit hyperrectangle, peut être défini de manière univoque uniquement par ces deux points ;

- la sélection, parmi lesdites régions convexes droites explorées, de régions d'intérêt, chaque région d'intérêt sélectionnée contenant un nombre de points vérifiant ladite modalité tel que la densité de ces points est supérieure à une densité-seuil prédéterminée, les valeurs limites des variables d'entrée qui délimitent une région d'intérêt donnée définissant une règle d'association dans la base de données.

Via un remodelage particulier de la structure des données de la base de données initiale, ainsi que de la structure des solutions retenues (remodelage représenté notamment par les étapes d'ordonnancement et d'exploration), le procédé selon l'invention permet avantageusement de réduire substantiellement la complexité combinatoire des calculs, sans nuire à la précision des résultats obtenus. Les calculs à effectuer par l'unité de traitement passent ainsi d'une complexité exponentielle (calculs tels qu'effectués dans les procédés d'induction de règles de l'art antérieur), à une complexité polynomiale, comme cela est démontré à l'avant-dernière section du présent document. Le temps de traitement global devient donc polynomial lui aussi. Un gain substantiel d'espace mémoire et une réduction des ressources matérielles utilisées pour les calculs sont ainsi obtenus. Ces différents avantages et effets techniques, qui seront illustrés à la fin du présent document, sont indifférents à la sémantique des données utilisées.

Grâce à ce passage d'une complexité exponentielle à une complexité polynomiale pour les calculs à effectuer par l'unité de traitement, le procédé selon l'invention peut être avantageusement appliqué pour des applications industrielles mettant en œuvre un grand nombre d'instances et de variables. De telles applications industrielles incluent par exemple, sans que cette liste ne soit exhaustive, des dispositifs d'analyse de pannes dans des systèmes industriels, des dispositifs de détection de vigilance du conducteur dans un véhicule, ou encore des dispositifs de recherches de relations de cause à effet dans des données médicales ou pharmaceutiques.

Le procédé de recherche de règles d'association selon l'invention permet en outre d'effectuer une exploration plus exhaustive de la base de données, permettant d'améliorer la précision des résultats obtenus. Une telle exploration plus exhaustive permet en particulier de construire des règles d'association qui ne soient ni fondées sur la couverture globale, ni sur le partitionnement. Un aspect clé faisant du procédé selon l'invention une recherche plus exhaustive est l'approche non-séquentielle. En particulier, l'étape d'exploration de régions convexes droites est effectuée de manière non-séquentielle. Cette approche non-séquentielle est fortement différenciante en comparaison des procédés d'induction de règles de l'art antérieur, notamment en comparaison du procédé PRIM.

L'exploration de régions convexes droites et la sélection, parmi ces régions convexes droites explorées, de régions d'intérêt, sont effectuées indépendamment pour chaque sous-espace de l'espace de dimension $N1$, et donc pour chaque combinaison de variables d'entrée correspondantes. Ainsi, le procédé de recherche de règles d'association selon l'invention est décentralisé. Cette décentralisation conduit avantageusement à du calcul parallélisé, au contraire du procédé PRIM de l'art antérieur dans lequel les calculs sont difficilement parallélisables. Cette parallélisation des calculs est cruciale et avantageuse du point de vue de la réduction du temps de traitement, du fait de la complexité combinatoire de ces calculs.

Avantageusement, chaque région d'intérêt sélectionnée contient en outre un nombre de points représentatifs d'instances, appelé taille, tel que ce nombre est supérieur à une taille-seuil minimale prédéterminée.

Cette caractéristique permet d'améliorer encore la précision des résultats obtenus.

Avantageusement, le procédé comprend en outre une étape de détermination, dans chaque sous-espace de l'espace de dimension $N1$, d'un majorant de la taille des régions convexes droites de ce sous-espace, et une étape de comparaison, pour chaque sous-espace de l'espace de dimension $N1$, entre ce majorant et ladite taille-seuil minimale.

Ces étapes permettent de déterminer le majorant de la taille d'une région convexe droite sans avoir à parcourir toutes les instances représentées par les points vérifiant la modalité contenus dans cette région, ainsi que de savoir si un sous-espace contient une forte densité de points vérifiant la modalité, sans avoir à explorer ce sous-espace. Ces étapes permettent d'obtenir une réduction avantageuse de la complexité et du temps de calcul.

Avantageusement, lors de l'étape d'exploration, dans des sous-espaces de l'espace de dimension *N1,* de régions convexes droites, seuls les sous-espaces pour lesquels le majorant déterminé est supérieur à la taille-seuil minimale sont explorés.

Cette caractéristique permet notamment de ne pas explorer certains chemins de sous-espaces qui seraient inutiles à explorer. Ainsi, cette caractéristique permet de réduire la complexité combinatoire liée au nombre de variables et au nombre d'espaces liés à ces variables, et d'ainsi permettre une réduction avantageuse de la complexité et du temps de calcul.

Avantageusement, le procédé comprend en outre une étape de raffinement des régions d'intérêt sélectionnées, l'étape de raffinement comprenant, pour chaque région d'intérêt sélectionnée, une première phase d'agrandissement, respectivement de réduction, de la taille de cette région par augmentation, selon chaque dimension du sous-espace associé à ladite région d'intérêt, de la valeur du rang maximum et/ou par diminution, selon chaque dimension du sous-espace associé à ladite région d'intérêt, de la valeur du rang minimum entre les deux instances définissant ladite région d'intérêt, pour la variable associée à cette dimension; respectivement par diminution, selon chaque dimension du sous-espace associé à ladite région d'intérêt, de la valeur du rang maximum et/ou par augmentation, selon chaque dimension du sous-espace associé à ladite région d'intérêt, de la valeur du rang minimum entre les deux instances définissant ladite région d'intérêt, pour la variable associée à cette dimension; et une deuxième phase au cours de laquelle la région d'intérêt ainsi agrandie, respectivement rétrécie, est ajoutée à l'ensemble des régions d'intérêt sélectionnées si la densité des points de cette région vérifiant ladite modalité est supérieure à ladite densité-seuil prédéterminée et si la taille de cette région est supérieure à ladite taille-seuil minimale prédéterminée.

Ces caractéristiques permettent d'optimiser la taille et la dimension de chaque région d'intérêt sélectionnée, et d'ainsi améliorer l'exhaustivité et la précision des résultats obtenus. Cette optimisation de la taille et de la dimension de chaque région d'intérêt sélectionnée est effectuée à pleine visibilité.

Avantageusement, chaque région d'intérêt sélectionnée définit un sous-ensemble de l'ensemble de données organisé sous la forme de la liste d'instances, et une valeur-p est calculée pour le sous-ensemble de données formé par chaque région d'intérêt sélectionnée, pour ladite modalité de la variable de sortie considérée.

Avantageusement, le procédé comprend en outre une étape de comparaison, pour chaque région d'intérêt sélectionnée, entre la valeur-p calculée pour cette région et une valeur-seuil maximale prédéterminée, et une étape de sélection finale des régions d'intérêt pour lesquelles la valeur-p calculée est inférieure à ladite valeur-seuil maximale.

Ces caractéristiques permettent de minimiser la probabilité de sélectionner de manière erronée des régions d'intérêt, et donc des règles d'association correspondantes, purement aléatoires.

L'invention se rapporte également à un produit programme d'ordinateur téléchargeable depuis un réseau de communication et/ou enregistré sur un support lisible par ordinateur et/ou exécutable par une unité de traitement d'un ordinateur ou par un circuit logique programmable ou reprogrammable, comprenant des instructions de programme, lesdites instructions de programme étant adaptées pour mettre en œuvre les étapes du procédé de recherche de règles d'association dans une base de données tel que décrit ci-dessus lorsque le produit programme est exécuté sur une unité de traitement d'un ordinateur ou sur un circuit logique programmable ou reprogrammable.

L'invention se rapporte également à un support d'enregistrement, de type circuit logique programmable ou reprogrammable, sur lequel est enregistré un programme d'ordinateur comprenant des instructions de code de programme pour mettre en œuvre tout ou partie des étapes du procédé de recherche de règles d'association dans une base de données tel que décrit ci-dessus.

**Définitions** :

**Ordinateur** : tout dispositif électronique structuré selon une architecture de type « von Neumann », et muni d'une unité de traitement de données, ainsi que de moyens de stockage de données, tel que par exemple un ordinateur de bureau, un ordinateur portable, un appareil de communication sans fil tel qu'un smartphone, ou encore une tablette numérique, sans que cette liste ne soit exhaustive.

**Circuit logique programmable ou reprogrammable** : tout circuit intégré logique apte à être reconfiguré après sa fabrication, tel que par exemple un circuit FPGA (de l'anglais « Field-Programmable Gate Array »), un circuit PLD (de l'anglais « Programmable Logic Device »), un circuit EPLD (de l'anglais « Erasable Programmable Logic Device »), un circuit CPLD (de l'anglais « Complex Programmable Logic Device »), un circuit PAL (de l'anglais « Programmable Array Logic »), ou encore un circuit PLA (de l'anglais « Programmable Logic Array »), sans que cette liste ne soit exhaustive.

**Instance ou individu :** ensemble de valeurs numériques réelles prises par un nombre prédéterminé de variables.

**Classe d'une instance ou d'un individu :** valeur numérique prise par une variable de sortie pour cette instance ou cet individu.

**Attributs d'une instance ou d'un individu :** ensemble des valeurs numériques prises par plusieurs variables d'entrée pour cette instance ou cet individu.

**Modalité :** critère à vérifier par la valeur d'une variable de sortie.

**Liste d'instances ou d'individus :** ensemble de plusieurs instances ou individus sélectionné(e)s parmi une population donnée.

**Espace ou sous-espace :** ensemble de n dimensions parmi les N dimensions (n ≤ N).

**Région d'un espace :** sous partie fermée d'un espace.

**Hyperrectangle :** analogue n-dimensionnel d'un rectangle en dimension deux, et d'un parallélépipède rectangle en dimension trois.

**Sommets d'un hyperrectangle diagonalement opposés selon une grande diagonale de cet hyperrectangle :** deux sommets d'un hyperrectangle qui sont opposés selon une grande diagonale, au sens géométrique du terme, de cet hyperrectangle, c'est-à-dire selon une diagonale telle que le plus court chemin (sur les arêtes de l'hyperrectangle) reliant les deux sommets opposés selon cette diagonale emprunte exactement un nombre d'arêtes égal au nombre de dimensions de cet hyperrectangle.

## BREVE DESCRIPTION DES FIGURES

D'autres caractéristiques et avantages de l'invention ressortiront à la lecture de la description qui suit, en référence aux figures annexées, dans lesquelles :

- la figure 1 est une représentation schématique d'un ordinateur, comprenant une unité de traitement et des moyens mémoire stockant une application apte à mettre en œuvre le procédé de recherche de règles d'association selon un mode de réalisation de l'invention ;

- la figure 2 est une représentation schématique d'un exemple de base de données au sein de laquelle le procédé de recherche de règles d'association selon un mode de réalisation de l'invention peut être appliqué ;

- la figure 3 est un organigramme représentant le procédé de recherche de règles d'association dans une base de données selon un mode de réalisation de l'invention ;

- la figure 4 est une représentation schématique d'une étape particulière du procédé de la figure 2, illustrant la représentation d'une région convexe droite particulière, dans un espace à trois dimensions ;

- la figure 5 est une représentation schématique d'un ensemble ordinateur - circuit logique programmable ou reprogrammable, le circuit logique stockant une application apte à mettre en œuvre le procédé selon un mode de réalisation de l'invention ;

- la Figure 6 représente le temps d'exploration dans un espace en fonction du nombre d'entités ;

- la Figure 7 représente le nombre de régions en fonction du nombre d'entités ;

- la Figure 8 représente la vitesse d'exploration en fonction du nombre d'entités ;

- la Figure 9 représente le temps d'exploration dans un espace en fonction du nombre de dimensions ;

- la Figure 10 représente le nombre de régions en fonction du nombre de dimensions ; et

- la Figure 11 représente la vitesse d'exploration en fonction du nombre de dimensions.

Pour plus de clarté, les éléments identiques ou similaires sont repérés par des signes de référence identiques sur l'ensemble des figures.

## MODES DE REALISATION

Dans la suite, il est divulgué en particulier un procédé de recherche de règles d'association dans une base de données 2.

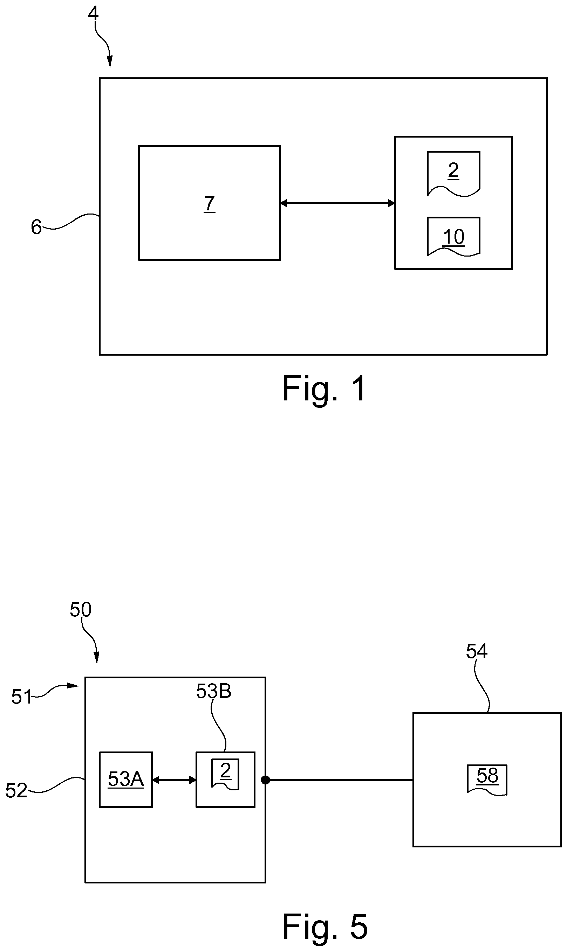

Un ordinateur 4 est représenté schématiquement sur la figure 1. L'ordinateur 4 est muni d'une unité de traitement 6. L'unité de traitement 6 comprend par exemple un processeur 7 et des moyens de mémorisation 8 reliés au processeur 7.

Les moyens de mémorisation 8 stockent la base de données 2, ainsi qu'une application 10.

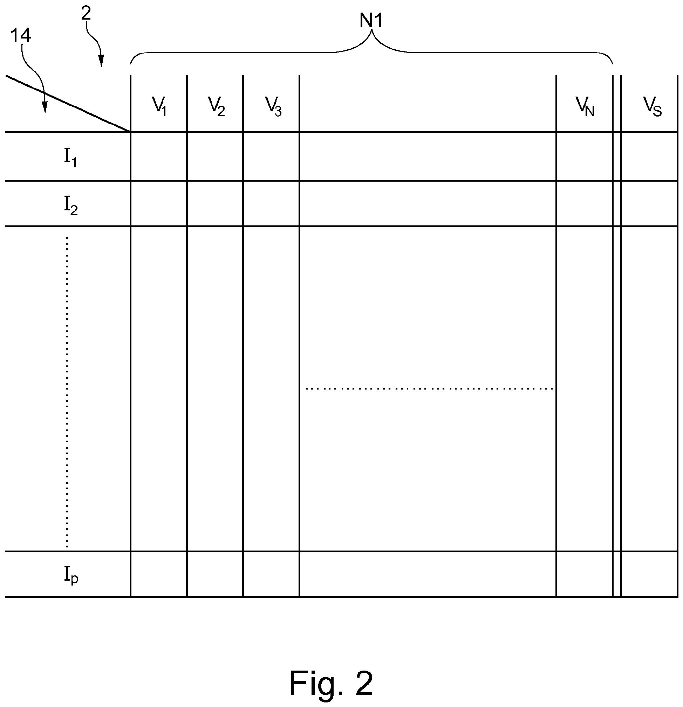

La base de données 2 comporte un ensemble de données. L'ensemble de données est organisé sous la forme d'une liste 14 d'instances $I_1,..I_P$, comme illustré sur la figure 2. Chaque instance $I_1,..I_P$ est définie par un ensemble de valeurs numériques réelles prises par un nombre prédéterminé de variables $V_1,..V_N, V_S$. Les variables $V_1,..V_N, V_S$ peuvent par exemple être des variables représentées par des valeurs numériques réelles.

L'application 10 est apte à être exécutée par le processeur 7 de l'unité de traitement 6, et comporte des instructions pour l'exécution d'un procédé de recherche de règles d'association selon l'invention, comme cela sera détaillé par la suite. L'application 10 est par exemple une application téléchargeable, via une plateforme de téléchargement non représentée sur les figures.

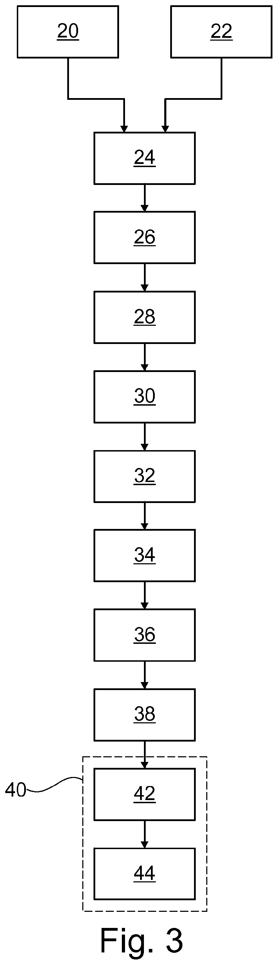

Le procédé de recherche de règles d'association dans la base de données 2, mis en œuvre par l'unité de traitement 6 de l'ordinateur 4, va maintenant être décrit en détail, en référence à la figure 3. On suppose qu'initialement l'application 10 est exécutée par le processeur 7 de l'unité de traitement 6.

Le procédé comporte une étape initiale 20 au cours de laquelle un ensemble de *N1* variables $V_2,..V_N$ sont sélectionnées parmi les variables $V_1,..V_N, V_S$ de la liste 14 d'instances. L'ensemble de *N1* variables $V_2,..V_N$ forme un ensemble de variables d'entrée et définit un espace de dimension *N1*.

Au cours d'une étape parallèle ou suivante 22, une variable $V_S$ est sélectionnée parmi les variables restantes $V_1, V_S$ de la liste 14 d'instances. La variable $V_S$ forme une variable de sortie. La variable $V_S$ peut par exemple être une variable catégorielle pouvant prendre un nombre prédéterminé de valeurs catégorielles.

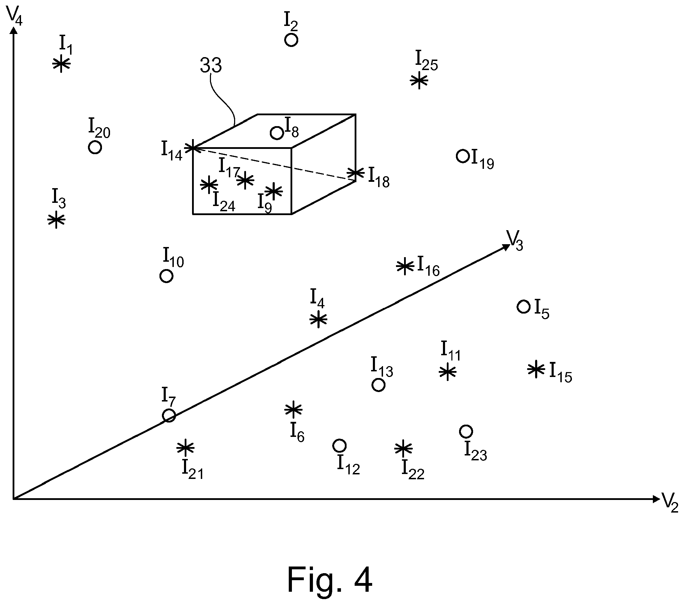

Au cours d'une étape suivante 24, pour chaque variable d'entrée sélectionnée $V_2,..V_N$, les valeurs numériques des instances $I_1,..I_P$ sont ordonnancées pour cette variable, de sorte à passer d'une topologie de valeurs réelles à une topologie de valeurs ordinales pour les variables d'entrée sélectionnées $V_2,..V_N$. Chaque instance $I_1,..I_P$ est alors définie par un ensemble de rangs associés à chacune des valeurs des variables d'entrée $V_2,..V_N$ de cette instance. Chaque instance $I_1,..I_P$ est alors représentée par un point dans l'espace de dimension *N1* formé par l'ensemble des *N1* variables d'entrée $V_2,..V_N$, comme représenté dans l'exemple illustré sur la figure 4, exemple pour lequel *N1* est égal à trois (trois variables d'entrée sélectionnées $V_2, V_3, V_4$), et P est égal à vingt-cinq (vingt-cinq instances $I_1,..I_{25}$). Cette étape d'ordon-nancement 24 en rangs permet de discrétiser les valeurs numériques des instances $I_1,..I_P$ pour les variables d'entrée $V_2,..V_N$, et d'ainsi pouvoir rendre le problème dénombrable. En effet, une telle étape d'ordonnancement en rangs permet de s'affranchir d'un grand nombre de calculs, tout en conservant la même topologie de résultats. Ceci permet de simplifier l'analyse combinatoire sans perdre de généralité des résultats, comme cela sera décrit par la suite en lien avec l'étape 32 d'exploration. Avantageusement, lors de cette étape d'ordonnancement 24, un traitement des éventuels doublons de valeurs des variables d'entrée est effectué, afin qu'il ne subsiste aucun doublon de rangs pour une même variable d'entrée à l'issue de cette étape. Un tel traitement peut par exemple consister, si deux valeurs d'une même variable d'entrée sont identiques pour deux instances, à leur affecter un rang différent consécutif. Une alternative d'un tel traitement peut consister à utiliser une autre variable, indicative du nombre d'instances ayant un même rang pour la variable d'entrée considérée.

Au cours d'une étape suivante ou parallèle 26, au moins une modalité est définie pour la variable de sortie $V_S$ sélectionnée. Une modalité est définie comme un critère à vérifier par la valeur de la variable de sortie $V_S$. Dans l'exemple de réalisation illustré sur la figure 4, la variable de sortie $V_S$ est une variable binaire apte à prendre deux valeurs distinctes : une première valeur représentée par une étoile dans l'espace de dimension *N1*, et une deuxième valeur représentée par un cercle dans ce même espace. Selon cet exemple de réalisation particulier, la modalité définie pour cette variable de sortie $V_S$ est la première valeur.

En variante non représentée, les étapes d'ordonnancement 24 et de définition d'au moins une modalité 26 peuvent être inversées.

De préférence, le procédé comprend une étape suivante 28 de détermination, dans chaque sous-espace de l'espace de dimension *N1*, d'un majorant de la taille des régions convexes droites de ce sous-espace ; ainsi qu'une étape 30 de comparaison, pour chaque sous-espace de l'espace de dimension *N1*, entre ce majorant et une taille-seuil minimale prédéterminée. La taille d'une région convexe droite donnée est définie comme étant le nombre de points

représentatifs d'instances $I_1,..I_P$ qui sont contenus, au sens géométrique du terme, dans le fermé formé par cette région convexe droite.

Au cours d'une étape suivante 32, des régions convexes droites sont explorées dans des sous-espaces de l'espace de dimension *N1*. Chaque région convexe droite explorée est un hyperrectangle présentant, sur deux sommets diagonalement opposés selon une grande diagonale de cet hyperrectangle, deux points représentatifs de deux instances $I_1,..I_P$ dont la valeur de la variable de sortie $V_S$ vérifie la modalité précédemment définie pour cette variable $V_S$ à l'étape 26. Plus précisément, chaque région convexe droite explorée est l'hyperrectangle qui, dans le sous-espace dont la dimension correspond à la dimension de cet hyperrectangle, peut être défini de manière univoque uniquement par ces deux points. Par exemple, dans l'exemple de réalisation particulier illustré sur la figure 4, une région convexe droite explorée 33 est représentée. Cette région convexe droite 33 est l'hyperrectangle de dimension trois (autrement dit un parallélépipède rectangle) qui présente, sur deux sommets diagonalement opposés selon une grande diagonale du parallélépipède, deux points représentatifs de deux instances $I_{14}$, $I_{18}$ dont la valeur de la variable de sortie $V_S$ vérifie la modalité (première valeur représentée par une étoile), et qui peut être défini de manière univoque uniquement par ces deux points $I_{14}$, $I_{18}$.

De préférence, lorsque le procédé comprend l'étape 28 de détermination et l'étape 30 de comparaison, seuls les sous-espaces pour lesquels le majorant déterminé est supérieur à la taille-seuil minimale prédéterminée sont explorés au cours de l'étape 32 d'exploration. Ceci permet de ne pas explorer certains chemins de sous-espaces qui seraient inutiles à explorer. Ainsi, cette caractéristique permet de réduire la complexité combinatoire liée au nombre de variables et au nombre d'espaces liés à ces variables, et d'ainsi permettre une réduction avantageuse de la complexité et du temps de calcul.

Au cours d'une étape suivante 34, certaines régions d'intérêt sont sélectionnées parmi les régions convexes droites explorées. Chaque région d'intérêt sélectionnée contient un nombre de points $I_1,..I_P$ vérifiant la modalité précédemment définie à l'étape 26 tel que la densité de ces points est supérieure à une densité-seuil prédéterminée. Avantageusement, chaque région d'intérêt sélectionnée contient en outre un nombre de points $I_1,..I_P$, appelé taille, tel que ce nombre est supérieur à la taille-seuil minimale prédéterminée. Par exemple, dans l'exemple de réalisation particulier illustré sur la figure 4, la région convexe droite explorée 33 a été sélectionnée en tant que région d'intérêt pour la modalité de la variable $V_S$ considérée. En effet, en considérant que la taille-seuil minimale était de cinq points et que la densité-seuil était de quatre points, la région convexe droite 33 contient six points $I_8$, $I_9$, $I_{14}$, $I_{17}$, $I_{18}$ représentatifs d'instances, et contient, parmi ces six points, cinq points $I_9$, $I_{14}$, $I_{17}$, $I_{18}$ dont la valeur de la variable de sortie $V_S$ vérifie la modalité (première valeur représentée par une étoile).

Chaque région d'intérêt sélectionnée définit un sous-ensemble de l'ensemble de données organisé sous la forme de la liste 14 d'instances. Les valeurs limites des variables d'entrée $V_2,..V_N$ qui délimitent une région d'intérêt donnée définissent une règle d'association dans la base de données 2. Lorsqu'une nouvelle instance dont seules les valeurs des variables d'entrée sont connues est ensuite ajoutée à la liste 14 d'instance de la base de données 2, une telle règle d'association permet ensuite de prédire éventuellement l'état de la variable de sortie $V_S$ pour cette nouvelle instance. En effet, si le point représentatif de cette nouvelle instance est contenu, au sens géométrique du terme, dans le fermé formé par la région convexe droite d'intérêt définissant la règle d'association, il est possible de prédire que l'état de la variable de sortie $V_S$ pour cette nouvelle instance correspondra à la modalité précédemment définie pour cette variable de sortie $V_S$.

De préférence, à l'issue de l'étape 34 de sélection, une valeur-p est calculée pour le sous-ensemble de données formé par chaque région d'intérêt sélectionnée, pour la modalité précédemment définie pour la variable de sortie $V_S$ à l'étape 26. Par « valeur-p » on entend la probabilité, dans un test statistique, d'obtenir la même valeur du test si l'hypothèse nulle était vraie. Dans le cas présent le test consiste, pour une région convexe droite explorée, à vérifier si cette région contient un nombre de points $I_1,..I_P$ vérifiant la modalité précédemment définie à l'étape 26 tel que la densité de ces points soit supérieure à la densité-seuil prédéterminée. Cette valeur-p permet ainsi dans le cas présent de déterminer à quel point la sélection d'une région d'intérêt donnée, et donc de la règle d'association correspondante, est statistiquement significative.

De préférence encore, lorsqu'une valeur-p est calculée pour le sous-ensemble de données formé par chaque région d'intérêt sélectionnée, le procédé comprend une étape suivante 36 de comparaison, pour chaque région d'intérêt sélectionnée, entre la valeur-p calculée pour cette région et une valeur-seuil maximale prédéterminée, et une étape 38 de sélection finale des régions d'intérêt pour lesquelles la valeur-p calculée est inférieure à cette valeur-seuil maximale.

Ces étapes de comparaison 36 et de sélection finale 38 permettent de minimiser la probabilité de sélectionner de manière erronée des régions d'intérêt, et donc des règles d'association correspondantes, purement aléatoires.

De préférence, le procédé comprend en outre une étape suivante 40 de raffinement des régions d'intérêt sélectionnées. L'étape de raffinement 40 comprend, pour chaque région d'intérêt sélectionnée, une première phase 42 d'agrandissement ou de réduction de la taille de cette région, et une deuxième phase 44 au cours de laquelle la région d'intérêt ainsi agrandie ou rétrécie est ajoutée à l'ensemble des régions d'intérêt sélectionnées si la densité des points $I_1,..I_P$ de cette région qui vérifient la modalité précédemment définie est supérieure à la densité-seuil prédéterminée, et si la taille de cette région est supérieure à la taille-seuil minimale prédéterminée.

Lorsqu'il s'agit d'un agrandissement de la taille de la région d'intérêt, la première phase 42 consiste en l'augmentation, selon chaque dimension du sous-espace associé à cette région d'intérêt, de la valeur du rang maximum entre les deux instances dont les deux points représentatifs définissent cette région d'intérêt, pour la variable associée à cette dimension. En variante ou en complément, cette première phase 42 peut aussi consister dans ce cas en la diminution, selon chaque dimension du sous-espace associé à cette région d'intérêt, de la valeur du rang minimum entre les deux instances dont les deux points représentatifs définissent cette région d'intérêt, pour la variable associée à cette dimension.

Lorsqu'il s'agit d'une réduction de la taille de la région d'intérêt, la première phase 42 consiste en la diminution, selon chaque dimension du sous-espace associé à cette région d'intérêt, de la valeur du rang maximum entre les deux instances dont les deux points représentatifs définissent cette région d'intérêt, pour la variable associée à cette dimension. En variante ou en complément, cette première phase 42 peut aussi consister dans ce cas en l'augmentation, selon chaque dimension du sous-espace associé à cette région d'intérêt, de la valeur du rang minimum entre les deux instances dont les deux points représentatifs définissent cette région d'intérêt, pour la variable associée à cette dimension.

Cette étape de raffinement 40 permet d'affiner les solutions retenues, en optimisant localement ainsi qu'en terme de dimensionnalité les régions d'intérêt sélectionnées lors de l'étape de sélection 34 ou 38, ceci afin d'identifier des régions d'intérêt encore meilleures. Cette étape de raffinement 40 permet ainsi d'optimiser la taille et la dimension de chaque région d'intérêt sélectionnée, et d'améliorer l'exhaustivité et la précision des résultats obtenus.

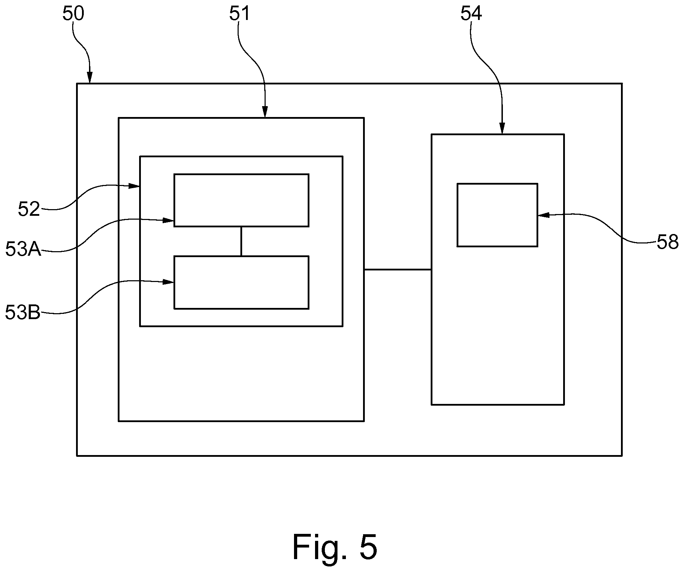

Un ensemble 50 comprenant un ordinateur 51 et un circuit logique programmable ou reprogrammable 54 est représenté schématiquement sur la figure 5.

L'ordinateur 51 est muni d'une unité de traitement 52. L'unité de traitement 52 comprend par exemple un processeur 53A et des moyens de mémorisation 53B reliés au processeur 53A. Les moyens de mémorisation 53B stockent la base de données 2.

Le circuit logique programmable ou reprogrammable 54 stocke une application 58. Le circuit logique programmable ou reprogrammable 54 forme ainsi un support d'enregistrement sur lequel est enregistrée l'application 58.

L'application 58 est apte à être exécutée par le circuit logique programmable ou reprogrammable 54, sur instruction de l'ordinateur 51, et comporte des instructions pour l'exécution du procédé de recherche de règles d'association selon l'invention. Cette exécution du procédé s'effectue de manière analogue à ce qui a été décrit précédemment en lien avec la mise en œuvre de l'application 10, et ne sera donc pas décrit ici plus en détail.

Ce portage de l'application 58 sur le circuit logique programmable ou reprogrammable 54 permet avantageusement de multiplier la vitesse de calcul tout en diminuant fortement le coût logistique et environnemental de l'utilisation d'un ordinateur unique.

En variante, l'application 58 est stockée dans les moyens de mémorisation 53B de l'ordinateur 51 ou dans le circuit logique programmable ou reprogrammable 54, et est exécutable en partie par le processeur 53A de l'unité de traitement 52, et en partie par le circuit logique programmable ou reprogrammable 54.

L'invention a été illustrée et décrite en détail dans les dessins et la description précédente. Celle-ci doit être considérée comme illustrative et donnée à titre d'exemple et non comme limitant l'invention à cette seule description. De nombreuses variantes de réalisation sont possibles.

**COMPLEXITE ALGORITHMIQUE DU PROCEDE**

**Formulation mathématique du problème à résoudre**

Soient **M** et **N** le nombre d'instances et le nombre de variables d'entrée de la base de données. Soit **C** la classe de la variable de sortie.

Le support (respectivement la taille) d'une région convexe droite **R** quelconque est défini comme suit :

$$\hat{\beta}_R = \frac{1}{M} \sum_{m \in R} 1(m \in R) \qquad (respectivement\ T_R = M\hat{\beta}_R)$$

Sa moyenne (respectivement sa pureté) est définie comme suit

$$\bar{y}_R = \frac{1}{M\hat{\beta}_R} \sum_{m \in R} 1(y_m \in C) \qquad (respectivement\ S_R = M\bar{y}_R)$$

Nous cherchons l'ensemble des régions $(R^{n,kn})_{ij}$, $n \leq N$, $(i,j)$ E $[1,M]^2$ dont la pureté sur une modalité spécifiée de la variable de sortie est supérieure à un certain seuil, et dont la taille est, de préférence, raisonnablement importante.

**Complexité du problème - approche « naïve » par énumération exhaustive des solutions**

Nous avons besoin de discrétiser l'espace pour pouvoir dénombrer les solutions possibles. En effet, dans le cas général où les dimensions du problème sont représentées par des variables numériques réelles, il existe une infinité de points de coordonnées permettant de servir de base à la construction d'une région convexe droite.

Une méthode naturelle pour effectuer la discrétisation de l'espace - et donc de rendre le problème dénombrable - consiste à limiter la précision des coordonnées des points composant l'espace des instances. On choisit alors une précision à $p$ chiffres après la virgule pour une plage de valeurs s'étalant dans un intervalle $[m;M]$. Dans ce cas, la discrétisation naturelle se fait en $10^p \times (M-m)$ valeurs distinctes.

En effectuant deux hypothèses, nous pouvons simplifier l'analyse combinatoire sans perte de généralité des résultats :

    a. Discrétisation identique sur toutes les dimensions
    b. Pas de prise en compte des doublons

*Dénombrement des solutions possibles dans un espace à D dimensions*

Pour un discrétisation à $n = 10^p \times (M - m)$ valeurs distinctes, il existe $n^D$-uplets de coordonnées, dont nous pouvons choisir 2 éléments distincts, nécessaires et suffisants pour caractériser une région convexe droite. En utilisant la notation classique de la combinatoire mathématique, il existe $C^2_{n^D} = \dfrac{n^D!}{(n^D-2)!2!}$ façons de choisir 2 éléments parmi un ensemble contenant **$n^D$** éléments. Nous devons diviser ce nombre par le nombre de diagonales que possède une région convexe droite en $D$ dimensions, soit $2^{D-1}$, puisque tous les couples de points diagonaux correspondant définissent tous la même région.

L'ordre de la complexité combinatoire liée à l'exploration d'un espace de dimension $D$ est donc :

$$\left(\frac{n^2}{2}\right)^D$$

*Dénombrement des sous-espaces de dimension $d \leq D$*

Toujours en utilisant les notations de combinatoire, l'exploration de l'ensemble des sous-espaces engendrés par les différentes combinaisons de variables du problème, nécessite le dénombrement de tous les choix possibles de $d$ éléments parmi **$D$**, pour $d \in$ **[1;D]**.

Il en existe $\sum_{d \in [1,D]} C^d_D = 2^D - 1$.

*Complexité combinatoire générale pour une discrétisation à n valeurs sur D dimensions*

L'ordre de grandeur de la taille du problème est donc le produit des deux ordres de grandeurs des dénombrements suscités, soit une complexité de **$n^{2D}$**, ce qui caractérise une croissance fortement exponentielle en fonction du niveau de discrétisation et du nombre de dimensions.

Pour un problème portant sur 10 variables :

• Discrétisation à 10 valeurs : 100 milliards de milliards de solutions environ

Pour un problème portant sur 20 (respectivement 50) variables :

• Discrétisation à 1000 valeurs : **$10^{120}$** (resp. **$10^{300}$**) solutions environ...

Il est bien entendu impossible de traiter numériquement un nombre aussi incommensurable de solutions. Il est nécessaire de contraindre plus avant la construction des régions convexes droites d'intérêt pour rendre l'exploration réalisable numériquement.

*Complexité combinatoire générale pour une discrétisation à **M** instances sur **D** dimensions*

Nous nous limitons à l'analyse de régions dont les extrémités (points diagonaux) correspondent à des instances de la base de données. Ainsi, dans le cas d'un problème contenant **M** instances (correspondant à **M** **D**-uplets de coordonnées dans l'espace des variables), nous obtenons les résultats suivants :

❑ Dénombrement de $R^{M,D} = \{(R^{d,k^d})_{ij}, d \leq D, (i,j) \in [1,M]^2\}$

Pour un nombre de dimensions **d** choisies parmi *D*, et une combinaison $k^d$ de variables, il existe $C_M^2$ régions convexes droites, et $C_D^d$ combinaisons de variables. Ainsi, $card(R^{M,D}) = C_M^2 \times \sum_{d \in [1,D]} C_D^d$.

Pour rappel $C_M^2 = \frac{M!}{(M-2)!2!}$ et $\sum_{d \in [1,D]} C_D^d = 2^D - 1$.

L'ordre de grandeur de la complexité du problème ainsi contraint est donc de : $M^2 \times 2^D$.

❑ Numériquement,

Le nombre de régions possibles augmente avec le carré du nombre d'instances :

- 10 variables / 10 points 50 000 régions environ
- 10 variables / 100 points 5 millions de régions environ
- 10 variables / 1000 points 500 millions de régions environ

Le nombre de régions possibles augmente exponentiellement avec le nombre de variables :

- 10 variables / 1000 points 500 millions de régions environ
- 20 variables / 1000 points 500 milliards de régions environ
- 50 variables / 1000 points 500 milliards de milliards de régions environ

La combinaison des deux dépendances ci-dessus donne ainsi une complexité exponentielle, puisque la dépendance globale est une puissance du nombre de dimensions (**$M^2 \times 2^D$**). Cette combinaison donne donc un temps de traitement exponentiel lui aussi.

On voit bien ici que même une base de données constituée de 50000 valeurs pose un problème combinatoire presque insoluble en force brute. En effet, même l'ordinateur le plus puissant disponible sur le marché mettrait plusieurs années pour explorer naïvement et exhaustivement l'ensemble de toutes les solutions.

**Complexité du problème** - **procédé de recherche de règles d'association selon l'invention**

Grâce au procédé de recherche de règles d'association dans une base de données selon l'invention, la complexité originelle du problème est très sensiblement réduite. Notamment, cette complexité n'est plus exponentielle mais polynomiale en fonction du nombre d'instances.

Plus précisément, ce passage d'une complexité exponentielle à une complexité polynomiale du problème est obtenu via :

❑ l'étape d'ordonnancement, pour chaque variable d'entrée de la liste d'instances sélectionnée, des valeurs numériques des instances pour cette variable, de sorte à passer d'une topologie de valeurs réelles à une topologie de valeurs ordinales pour les variables d'entrée sélectionnées
→ *réduction de la complexité du problème d'un facteur pouvant aller de 10 à 10 000 voire beaucoup plus (facteur croissant en fonction du nombre de variables)*

❑ l'étape d'exploration, dans des sous-espaces de l'espace de dimension N1, de régions convexes droites, chaque région convexe droite explorée étant un hyperrectangle présentant, sur deux sommets diagonalement opposés selon une grande diagonale dudit hyperrectangle, deux points représentatifs de deux instances dont la valeur de la variable de sortie vérifie la modalité, chaque région convexe droite explorée étant en outre l'hyperrectangle qui, dans le sous-espace dont la dimension correspond à la dimension dudit hyperrectangle, peut être défini de manière univoque uniquement par ces deux points.

→ *réduction de la complexité du problème d'un facteur pouvant aller de 10 à 100 (facteur croissant en fonction du nombre d'instances)*

Numériquement, pour **D** dimensions et **M** instances, le nombre de régions à explorer via la mise en œuvre d'une telle étape d'exploration est :

$$\frac{M.(M-1)}{2}$$

La complexité du problème devient polynomiale, puisque la dépendance globale est selon le carré du nombre d'instances **($M^2$),** et ne dépend plus du nombre de dimensions. Le temps de traitement global est donc polynomial lui aussi.

On obtient ainsi, en fonction de la dimension initiale du problème, une réduction globale de la complexité de ce problème d'un facteur pouvant aller de 100 à 1 000 000, voire beaucoup plus dans des espaces de données à forte dimensionnalité. Cette réduction est obtenue uniquement en travaillant de manière ingénieuse sur la structure des données de la base de données initiale, ainsi que sur la structure des solutions retenues.

**EXEMPLES NUMERIQUES (TEMPS DE TRAITEMENT COMPARES)**

Les exemples ci-après ont été exécutés sur une machine Dell Optiplex 380 (marques déposées) ayant comme unité centrale un Intel Core 3 Duo E8400 fonctionnant à 3GHz et avec une mémoire centrale de 4Go. Le système d'exploitation de cette machine est Windows 7 Professionnel 64bits.

Les données utilisées ont variées de 100 à 500 entités et de 5 à 10 dimensions.

**Résultats**

**Impact du nombre d'attributs**

Le nombre d'attributs (les variables attachées aux dimensions) entraine un faible impact sur les performances. Un univers de 100 entités comportant de 5 à 10 attributs (donc 465 régions quel que soit le nombre de dimensions) est testé en approximativement en 20 ms.

*Temps d'exécution (en ms)*

| Dim/Size | 5 | 6 | 7 | 8 | 9 | 10 |
|---|---|---|---|---|---|---|
| 100 | 16 | 22 | 25 | 19 | 16 | 20 |

**Impact du nombre d'entités**

Exploration d'un seul espace

Lorsque l'univers (ici en 5 dimensions) passe de 100 à 500 entités, le temps d'exécution passe de 16 à 1.636 ms avec un total des régions explorées passant de 465 à 12.850 (NB : on n'explore ici qu'un seul espace à 5 dimensions et non tous ses sous-espaces).

Le temps d'exploration augmente bien avec le nombre d'entités, mais on constate surtout une décélération : la vitesse d'exploration (exprimée régions/s) décroit avec le nombre d'entités.

Dimensions : 5

| Size | Time (ms) | Regions | Speed |
|---|---|---|---|
| 100 | 16 | 465 | 29 063 |
| 200 | 135 | 2 345 | 17 370 |
| 300 | 417 | 5 043 | 12 094 |
| 400 | 1 082 | 8 761 | 8 097 |
| 500 | 1 636 | 12 850 | 7 855 |

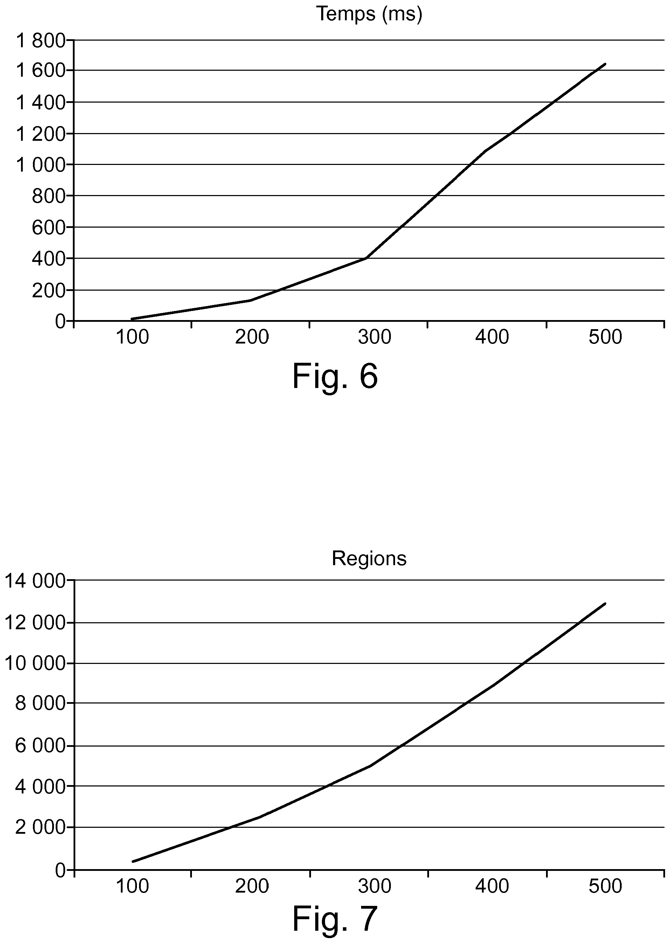

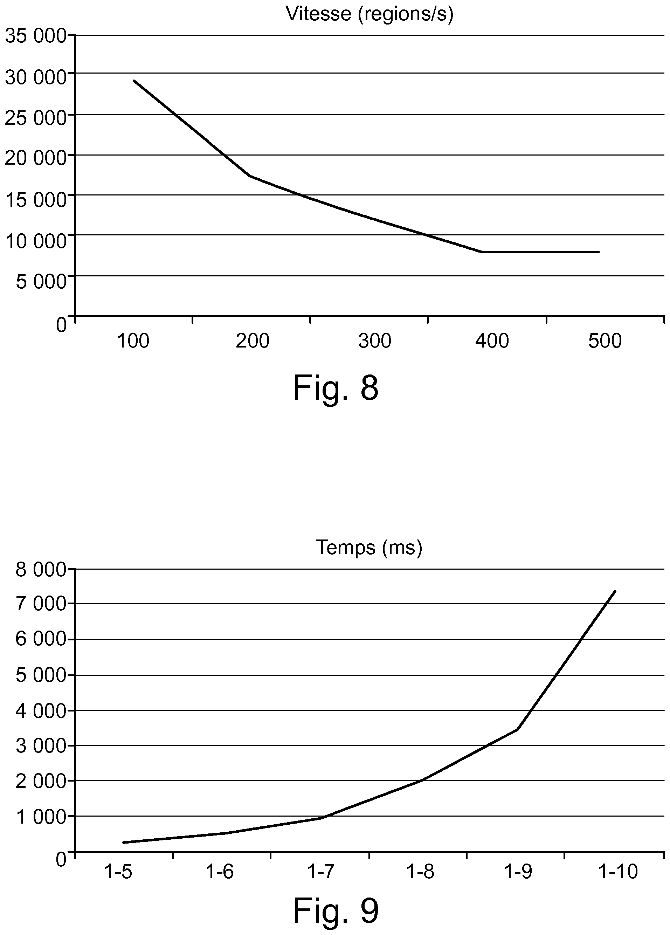

Ainsi, la Figure 6 représente le temps d'exploration dans un espace en fonction du nombre d'entités, la Figure 7 représente le nombre de régions en fonction du nombre d'entités et la Figure 8 représente la vitesse d'exploration en fonction du nombre d'entités.

Exploration de tous les sous-espaces (1 à 5 dimensions)

Lorsqu'on explore tous les sous-espaces de 1 à 5 dimensions avec un univers contenant de 100 à 500 entités, le temps d'exécution passe de 251 à 36.257 ms avec un total des régions explorées passant de 14.415 à 398.576.

| Size | Time (ms) | Regions |
|---|---|---|
| 100 | 251 | 14 415 |
| 200 | 2 558 | 72 702 |
| 300 | 9 162 | 156 390 |
| 400 | 22 152 | 271 726 |
| 500 | 36 257 | 398 576 |

**Impact du nombre de dimensions**

On explore ici un univers de 100 entités dans des espaces comportant de 1 à 10 dimensions.

| Spaces | 1-5 | 1-6 | 1-7 | 1-8 | 1-9 | 1-10 |
|---|---|---|---|---|---|---|
| Time | 251 | 490 | 931 | 1 964 | 3 469 | 7 324 |
| Regions | 14 415 | 29 295 | 59 055 | 118 575 | 237 359 | 475 183 |

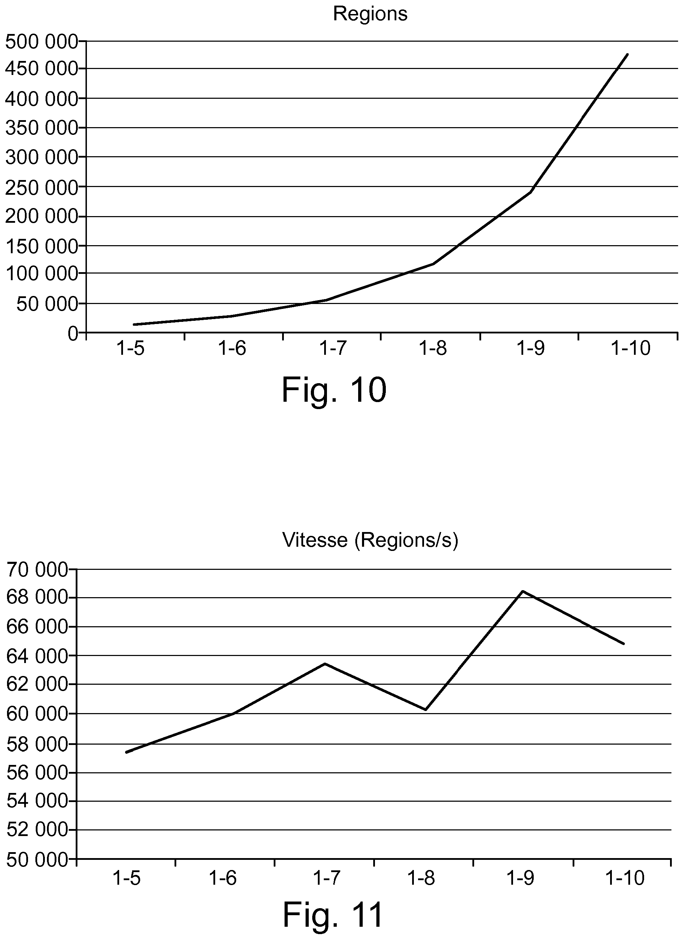

Ainsi, la Figure 9 représente le temps d'exploration dans un espace en fonction du nombre de dimensions, la Figure 10 représente le nombre de régions en fonction du nombre de dimensions et la Figure 11 représente la vitesse d'exploration en fonction du nombre de dimensions.

Ainsi on constate que la vitesse d'exploration est à peu près constante à 62 000 régions/s (ici pour un univers de 100 entités), mais le nombre de régions croît exponentiellement avec le nombre de dimensions.

Par ailleurs, le test atomique d'appartenance d'une entité à une région ne dépend que faiblement du nombre d'attributs, la vitesse d'exploration décroit avec le nombre d'entités, et le temps total d'exploration varie linéairement avec le nombre de régions à explorer, mais ce nombre croît beaucoup plus vite avec le nombre de dimensions qu'avec le nombre d'entités.

**Revendications**

1. Procédé, mis en œuvre par une unité de traitement (6 ; 52) d'un ordinateur (4 ; 51) et/ou par un circuit logique programmable ou reprogrammable (54), de recherche de règles d'association dans une base de données (2), la base de données (2) étant stockée dans des moyens de mémorisation (8 ; 53B) de l'unité de traitement (6 ; 52) ou dans le circuit logique programmable ou reprogrammable (54) et comportant un ensemble de données, l'ensemble de données étant organisé sous la forme d'une liste (14) d'instances, chaque instance étant définie par un ensemble de valeurs numériques réelles prises par un nombre prédéterminé de variables ; le procédé comprenant les étapes suivantes:

   - la sélection (20) d'un ensemble de *N1* variables parmi lesdites variables de la liste (14) d'instances, ledit ensemble de *N1* variables formant un ensemble de variables d'entrée et définissant un espace de dimension *N1* ; et la sélection (22) d'une variable parmi les variables restantes de la liste (14) d'instances, ladite variable formant une variable de sortie ;
   - l'ordonnancement (24), pour chaque variable d'entrée de la liste (14) d'instances sélectionnée, des valeurs numériques des instances pour cette variable, de sorte à passer d'une topologie de valeurs réelles à une topologie de valeurs ordinales pour les variables d'entrée sélectionnées, chaque instance étant alors définie par un ensemble de rangs associés à chacune des valeurs des variables d'entrée de cette instance, chaque instance étant représentée par un point dans ledit espace de dimension *N1* ;
   - la définition (26) d'au moins une modalité pour la variable de sortie sélectionnée, ladite modalité étant définie

13

comme un critère à vérifier par la valeur de ladite variable de sortie ;
- l'exploration (32), dans des sous-espaces de l'espace de dimension *N1,* de régions convexes droites (33), chaque région convexe droite explorée (33) étant un hyperrectangle présentant, sur deux sommets diagonalement opposés selon une grande diagonale dudit hyperrectangle, deux points représentatifs de deux instances dont la valeur de la variable de sortie vérifie ladite modalité, chaque région convexe droite explorée (33) étant en outre l'hyperrectangle qui, dans le sous-espace dont la dimension correspond à la dimension dudit hyperrectangle, peut être défini de manière univoque uniquement par ces deux points ;
- la sélection (34), parmi lesdites régions convexes droites explorées, de régions d'intérêt, chaque région d'intérêt sélectionnée contenant un nombre de points vérifiant ladite modalité tel que la densité de ces points est supérieure à une densité-seuil prédéterminée, les valeurs limites des variables d'entrée qui délimitent une région d'intérêt donnée définissant une règle d'association dans la base de données (2).

2. Procédé selon la revendication 1, dans lequel chaque région d'intérêt sélectionnée contient en outre un nombre de points représentatifs d'instances, appelé taille, tel que ce nombre est supérieur à une taille-seuil minimale prédéterminée.

3. Procédé selon la revendication 2, dans lequel le procédé comprend en outre une étape (28) de détermination, dans chaque sous-espace de l'espace de dimension *N1,* d'un majorant de la taille des régions convexes droites de ce sous-espace, et une étape (30) de comparaison, pour chaque sous-espace de l'espace de dimension *N1,* entre ce majorant et ladite taille-seuil minimale.

4. Procédé selon la revendication 3, dans lequel, lors de l'étape (32) d'exploration, dans des sous-espaces de l'espace de dimension *N1,* de régions convexes droites, seuls les sous-espaces pour lesquels le majorant déterminé est supérieur à la taille-seuil minimale sont explorés.

5. Procédé selon l'une quelconque des revendications 2 à 4, dans lequel le procédé comprend en outre une étape (40) de raffinement des régions d'intérêt sélectionnées, l'étape de raffinement (40) comprenant, pour chaque région d'intérêt sélectionnée, une première phase (42) d'agrandissement, respectivement de réduction, de la taille de cette région par augmentation, selon chaque dimension du sous-espace associé à ladite région d'intérêt, de la valeur du rang maximum et/ou par diminution, selon chaque dimension du sous-espace associé à ladite région d'intérêt, de la valeur du rang minimum entre les deux instances définissant ladite région d'intérêt, pour la variable associée à cette dimension; respectivement par diminution, selon chaque dimension du sous-espace associé à ladite région d'intérêt, de la valeur du rang maximum et/ou par augmentation, selon chaque dimension du sous-espace associé à ladite région d'intérêt, de la valeur du rang minimum entre les deux instances définissant ladite région d'intérêt, pour la variable associée à cette dimension; et une deuxième phase (44) au cours de laquelle la région d'intérêt ainsi agrandie, respectivement rétrécie, est ajoutée à l'ensemble des régions d'intérêt sélectionnées si la densité des points de cette région vérifiant ladite modalité est supérieure à ladite densité-seuil prédéterminée et si la taille de cette région est supérieure à ladite taille-seuil minimale prédéterminée.

6. Procédé selon l'une quelconque des revendications précédentes, dans lequel chaque région d'intérêt sélectionnée définit un sous-ensemble de l'ensemble de données organisé sous la forme de la liste (14) d'instances, et dans lequel une valeur-p est calculée pour le sous-ensemble de données formé par chaque région d'intérêt sélectionnée, pour ladite modalité de la variable de sortie considérée.

7. Procédé selon la revendication 6, dans lequel le procédé comprend en outre une étape (36) de comparaison, pour chaque région d'intérêt sélectionnée, entre la valeur-p calculée pour cette région et une valeur-seuil maximale prédéterminée, et une étape (38) de sélection finale des régions d'intérêt pour lesquelles la valeur-p calculée est inférieure à ladite valeur-seuil maximale.

8. Produit programme d'ordinateur (10 ; 58) téléchargeable depuis un réseau de communication et/ou enregistré sur un support lisible par ordinateur et/ou exécutable par une unité de traitement (6 ; 52) d'un ordinateur (4 ; 51) ou par un circuit logique programmable ou reprogrammable (54), **caractérisé en ce qu'**il comprend des instructions de programme, lesdites instructions de programme étant adaptées pour mettre en œuvre les étapes du procédé de recherche de règles d'association dans une base de données (2) selon l'une quelconque des revendications précédentes lorsque le produit programme est exécuté sur une unité de traitement (6 ; 52) d'un ordinateur (4 ; 51) ou sur un circuit logique programmable ou reprogrammable (54).

9. Support d'enregistrement (54), de type circuit logique programmable ou reprogrammable, sur lequel est enregistré un programme d'ordinateur (58) comprenant des instructions de code de programme pour mettre en œuvre tout ou partie des étapes du procédé de recherche de règles d'association dans une base de données (2) selon l'une quelconque des revendications 1 à 7.

**Patentansprüche**

1. Verfahren, durchgeführt von einer Verarbeitungseinheit (6; 52) eines Computers (4; 51) und/oder von einer programmierbaren oder umprogrammierbaren logischen Schaltung (54), zur Suche von Assoziationsregeln in einer Datenbank (2), wobei die Datenbank (2) in Speichereinrichtungen (8; 53B) der Verarbeitungseinheit (6; 52) oder in der programmierbaren oder umprogrammierbaren logischen Schaltung (54) gespeichert ist und eine Einheit von Daten aufweist, wobei die Dateneinheit in Form einer Liste (14) von Instanzen organisiert ist, wobei jede Instanz durch eine Einheit von realen Zahlenwerten definiert wird, die von einer vorbestimmten Anzahl von Variablen angenommen werden; wobei das Verfahren die folgenden Schritte enthält:

   - die Auswahl (20) einer Einheit von *N1* Variablen unter den Variablen der Liste (14) von Instanzen, wobei die Einheit von *N1* Variablen eine Einheit von Eingangsvariablen bildet und einen dimensionalen Raum *N1* definiert; und die Auswahl (22) einer Variablen unter den verbleibenden Variablen der Liste (14) von Instanzen, wobei die Variable eine Ausgangsvariable bildet;
   - die Ablaufsteuerung (24), für jede ausgewählte Eingangsvariable der Liste (14) von Instanzen, der Zahlenwerte der Instanzen für diese Variable, um von einer Topologie realer Werte zu einer Topologie ordinaler Werte für die ausgewählten Eingangsvariablen überzugehen, wobei jede Instanz dann von einer Einheit von Rängen definiert wird, die jedem der Werte der Eingangsvariablen dieser Instanz zugeordnet sind, wobei jede Instanz durch einen Punkt im dimensionalen Raum *N1* dargestellt wird;
   - die Definition (26) mindestens einer Modalität für die ausgewählte Ausgangsvariable, wobei die Modalität als ein durch den Wert der Ausgangsvariablen zu verifizierendes Kriterium definiert wird;
   - die Exploration (32), in Unterräumen des dimensionalen Raums *N1*, von geraden konvexen Bereichen (33), wobei jeder explorierte gerade konvexe Bereich (33) ein Hyperrechteck ist, das an zwei gemäß einer großen Diagonalen des Hyperrechtecks diagonal entgegengesetzten Eckpunkten zwei für zwei Instanzen repräsentative Punkte aufweist, deren Wert der Ausgangsvariablen die Modalität verifiziert, wobei jeder explorierte gerade konvexe Bereich (33) außerdem das Hyperrechteck ist, das im Unterraum, dessen Dimension der Dimension des Hyperrechtecks entspricht, nur durch diese zwei Punkte eindeutig definiert werden kann;
   - die Auswahl (34), unter den explorierten geraden konvexen Bereichen, von interessierenden Bereichen, wobei jeder ausgewählte interessierende Bereich eine Anzahl von Punkten enthält, die die Modalität verifizieren, derart, dass die Dichte dieser Punkte größer ist als eine vorbestimmte Schwellendichte, wobei die Grenzwerte der Eingangsvariablen, die einen gegebenen interessierenden Bereich begrenzen, eine Assoziationsregel in der Datenbank (2) definieren.

2. Verfahren nach Anspruch 1, wobei jeder ausgewählte interessierende Bereich außerdem eine Anzahl von für Instanzen repräsentativen Punkten enthält, Größe genannt, derart, dass diese Anzahl größer ist als eine vorbestimmte minimale Schwellengröße.

3. Verfahren nach Anspruch 2, wobei das Verfahren außerdem einen Schritt (28) der Bestimmung, in jedem Unterraum des dimensionalen Raums *N1*, eines Majoranten der Größe der geraden konvexen Bereiche dieses Unterraums, und einen Schritt (30) des Vergleichs, für jeden Unterraum des dimensionalen Raums *N1*, zwischen diesem Majoranten und der minimalen Schwellengröße enthält.

4. Verfahren nach Anspruch 3, wobei im Schritt (32) der Exploration, in Unterräumen des dimensionalen Raums *N1*, von geraden konvexen Bereichen nur die Unterräume, für die der bestimmte Majorant größer ist als die minimale Schwellengröße, exploriert werden.

5. Verfahren nach einem der Ansprüche 2 bis 4, wobei das Verfahren außerdem einen Schritt (40) der Verfeinerung der ausgewählten interessierenden Bereiche enthält, wobei der Verfeinerungsschritt (40) für jeden ausgewählten interessierenden Bereich eine erste Phase (42) der Vergrößerung bzw. der Verkleinerung der Größe dieses Bereichs durch Erhöhung, gemäß jeder Dimension des dem interessierenden Bereich zugeordneten Unterraums, des Werts des maximalen Rangs, und/oder durch Verringerung, gemäß jeder Dimension des dem interessierenden Bereich zugeordneten Unterraums, des Werts des minimalen Rangs zwischen den zwei den interessierenden Bereich definierenden Instanzen, für die dieser Dimension zugeordnete Variable; bzw. durch Verringerung, gemäß jeder Dimension des dem interessierenden Bereich zugeordneten Unterraums, des Werts des maximalen Rangs, und/oder durch Erhöhung, gemäß jeder Dimension des dem interessierenden Bereich zugeordneten Unterraums, des Werts des minimalen Rangs zwischen den zwei den interessierenden Bereich definierenden Instanzen, für die dieser Dimension zugeordnete Variable; und eine zweite Phase (44) enthält, während der der so vergrößerte bzw. verkleinerte interessierende Bereich der Einheit von ausgewählten interessierenden Bereichen hinzugefügt wird, wenn die Dichte der Punkte dieses Bereichs, die die Modalität verifiziert, größer als die vorbestimmte Schwellendichte ist, und wenn die Größe dieses Bereichs größer als die vorbestimmte minimale Schwellengröße ist.

6. Verfahren nach einem der vorhergehenden Ansprüche, wobei jeder ausgewählte interessierende Bereich eine Untereinheit der Dateneinheit definiert, organisiert in Form der Liste (14) von Instanzen, und wobei ein p-Wert für die von jedem ausgewählten interessierenden Bereich gebildete Datenuntereinheit für die Modalität der betrachteten Ausgangsvariablen berechnet wird.

7. Verfahren nach Anspruch 6, wobei das Verfahren außerdem einen Schritt (36) des Vergleichs, für jeden ausgewählten interessierenden Bereich, zwischen dem für diesen Bereich berechneten p-Wert und einem vorbestimmten maximalen Schwellenwert, und einen Schritt (38) der Endauswahl der interessierenden Bereiche enthält, für die der berechnete p-Wert niedriger als der maximale Schwellenwert ist.

8. Computerprogrammprodukt (10; 58), das von einem Kommunikationsnetzwerk herunterladbar und/oder auf einem computerlesbaren Träger gespeichert und/oder von einer Verarbeitungseinheit (6; 52) eines Computers (4; 51) oder einer programmierbaren oder umprogrammierbaren logischen Schaltung (54) ausführbar ist, **dadurch gekennzeichnet, dass** es Programmanweisungen enthält, wobei die Programmanweisungen geeignet sind, die Schritte des Suchverfahrens von Assoziationsregeln in einer Datenbank (2) nach einem der vorhergehenden Ansprüche durchzuführen, wenn das Programmprodukt auf einer Verarbeitungseinheit (6; 52) eines Computers (4; 51) oder auf einer programmierbaren oder umprogrammierbaren logischen Schaltung (54) ausgeführt wird.

9. Speicherträger (54), der Art programmierbare oder umprogrammierbare logische Schaltung, auf dem ein Computerprogramm (58) gespeichert ist, das Programmcodeanweisungen enthält, um alle oder einen Teil der Schritte des Verfahrens zur Suche von Assoziationsregeln in einer Datenbank (2) nach einem der Ansprüche 1 bis 7 durchzuführen.

**Claims**

1. Method, implemented by a processing unit (6; 52) of a computer (4; 51) and/or by a programmable or reprogrammable logic circuit (54), for searching for association rules in a database (2), the database (2) being stored in storage means (8; 53B) of the processing unit (6; 52) or in the programmable or reprogrammable logic circuit (54) and including a set of data, the set of data being organized in the form of a list (14) of instances, each instance being defined by a set of real numerical values taken by a predefined number of variables; the method comprising the following steps:

   - selecting (20) a set of *N1* variables from said variables in the list (14) of instances, said set of *N1* variables forming a set of input variables and defining an *N1*-dimensional space; and selecting (22) one variable from the remaining variables in the list (14) of instances, said variable forming an output variable;
   - ordering (24), for each selected input variable in the list (14) of instances, the numerical values of the instances for this variable, so as to move from a topology of real values to a topology of ordinal values for the selected input variables, each instance then being defined by a set of ranks which are associated with each one of the values of the input variables of this instance, each instance being represented by a point in said *N1*-dimensional space;
   - defining (26) at least one modality for the selected output variable, said modality being defined as a criterion to be verified by the value of said output variable;
   - exploring (32), in subspaces of the *N1*-dimensional space, right convex regions (33), each explored right convex region (33) being a hyperrectangle having, on two vertices diagonally opposite each other along a large diagonal of said hyperrectangle, two points that are representative of two instances the value of the output variable of which verifies said modality, each explored right convex region (33) further being the hyperrectangle which, in the subspace the dimension of which corresponds to the dimension of said hyperrectangle, may be unequivocally defined only by these two points;
   - selecting (34), from said explored right convex regions, regions of interest, each selected region of interest containing a number of points verifying said modality such that the density of these points is greater than a predefined threshold density, the limit values of the input variables which delimit a given region of interest defining an association rule in the database (2) .

2. Method according to Claim 1, wherein each selected region of interest further contains a number of points that are representative of instances, referred to as size, such that this number is greater than a predefined minimum threshold size.

3. Method according to Claim 2, wherein the method further comprises a step (28) of determining, in each subspace of the *N1*-dimensional space, an upper bound of the size of the right convex regions of this subspace, and a step (30) of comparing, for each subspace of the *N1*-dimensional space, this upper bound and said minimum threshold size.

4. Method according to Claim 3, wherein, during the step (32) of exploring, in subspaces of the N1-dimensional space, right convex regions, only the subspaces for which the determined upper bound is greater than the minimum threshold size are explored.

5. Method according to any one of Claims 2 to 4, wherein the method further comprises a step (40) of refining the selected regions of interest, the refining step (40) comprising, for each selected region of interest, a first phase (42) of enlarging, or of reducing, the size of this region by increasing, in each dimension of the subspace associated with said region of interest, the value of the maximum rank and/or by decreasing, in each dimension of the subspace associated with said region of interest, the value of the minimum rank between the two instances defining said region of interest, for the variable associated with this dimension; or by decreasing, in each dimension of the subspace associated with said region of interest, the value of the maximum rank and/or by increasing, in each dimension of the subspace associated with said region of interest, the value of the minimum rank between the two instances defining said region of interest, for the variable associated with this dimension; and a second phase (44) in the course of which the region of interest thus enlarged, or contracted, is added to the set of the selected regions of interest if the density of the points in this region verifying said modality is greater than said predefined threshold density and if the size of this region is greater than said predefined minimum threshold size.

6. Method according to any one of the preceding claims, wherein each selected region of interest defines a subset of the set of data which is organized in the form of the list (14) of instances, and wherein a p-value is calculated for the subset of data formed by each selected region of interest, for said modality of the output variable under consideration.

7. Method according to Claim 6, wherein the method further comprises a step (36) of comparing, for each selected region of interest, the p-value calculated for this region and a predefined maximum threshold value, and a step (38) of finally selecting the regions of interest for which the calculated p-value is smaller than said maximum threshold value.

8. Computer program product (10; 58) which can be downloaded from a communication network and/or is stored on a computer-readable medium and/or can be executed by a processing unit (6; 52) of a computer (4; 51) or by a programmable or reprogrammable logic circuit (54), **characterized in that** it comprises program instructions, said program instructions being designed to implement the steps of the method for searching for association rules in a database (2) according to any one of the preceding claims when the program product is executed on a processing unit (6; 52) of a computer (4; 51) or on a programmable or reprogrammable logic circuit (54).

9. Storage medium (54), of programmable or reprogrammable logic circuit type, on which a computer program (58) comprising program code instructions for implementing all or some of the steps of the method for searching for association rules in a database (2) according to any one of Claims 1 to 7 is stored.

Fig. 1

Fig. 5

| | $V_1$ | $V_2$ | $V_3$ | | $V_N$ | | $V_S$ |
|---|---|---|---|---|---|---|---|
| $I_1$ | | | | | | | |
| $I_2$ | | | | | | | |
| ⋮ | | | | ⋯ | | | |
| $I_p$ | | | | | | | |

Fig. 2

Fig. 3

Fig. 4

Fig. 5

Temps (ms)

Fig. 6

Regions

Fig. 7

Vitesse (regions/s)

Fig. 8

Temps (ms)

Fig. 9

Regions

Fig. 10

Vitesse (Regions/s)

Fig. 11